# EUROPÄISCHE PATENTSCHRIFT

(11) **EP 0 896 417 B1**
(45) Veröffentlichungstag und Bekanntmachung des Hinweises auf die Patenterteilung: **04.12.2002**
(21) Anmeldenummer: 98112685.7
(22) Anmeldetag: 09.07.1998
(51) Int. Cl.: H02M 3/156

(54) **Schaltungsanordnung mit einem Schalttransistor**
Circuit arrangement with a switching transistor
Disposition de circuit avec un transistor à commutation

(30) Priorität: 08.08.1997 DE 19734410
(43) Veröffentlichungstag der Anmeldung: 10.02.1999
(73) Patentinhaber: ROBERT BOSCH GMBH, 70442 Stuttgart (DE)
(72) Erfinder: Borho, Lothar, 77731 Willstaet (DE); Preis, Karl-Heinrich, 77830 Buehlertal (DE); Decker, Gerhard, 77855 Achern (DE); Eckert, Klaus, 77770 Durchbach Ebersweier (DE)
(74) Vertreter: Dreiss, Fuhlendorf, Steimle & Becker

(56) Entgegenhaltungen:
- EP-A- 0 464 909
- EP-A- 0 665 629
- PATENT ABSTRACTS OF JAPAN vol. 013, no. 323 (E-791), 21. Juli 1989 (1989-07-21) & JP 01 089916 A (MITSUBISHI ELECTRIC CORP), 5. April 1989 (1989-04-05)

## Beschreibung

### Stand der Technik

Die Erfindung bezieht sich auf eine Schaltungsanordnung mit einem in einem ersten Schaltungsabschnitt angeordneten Schalttransistor, der über eine ein Steuerglied aufweisende Ansteuereinheit zur Abgabe eines vorgegebenen oder vorgebbaren Ausgangsstroms intermittierend angesteuert wird.

Eine Schaltungsanordnung dieser Art ist in der DE-Z "Elektor", 4/93, Seiten 41, 42, 47 und 48 angegeben. Um den Schalttransistor in Form eines Feldeffekttransistors gegen zu hohe Verlustleistung zu schützen, ist ein Widerstand mit negativem Temperaturkoeffizienten, d.h. ein NTC-Widerstand vorgesehen, der mit dem Leistungstransistor in engem thermischem Kontakt steht, um ihn bei zu hoher Verlustleistung abzuschalten. Ein derartiges Abschalten ist in vielen Fällen ungeeignet. Ähnlich wirkt auch ein auf Seite 48 dieser Literaturstelle angegebener Temperatursensor. Eine Anordnung gemäß dem Oberbegriff des Anspruchs 1 ist durch die JP1089916 bekannt geworden.

Der Erfindung liegt die Aufgabe zugrunde, eine Schaltungsanordnung der eingangs genannten Art bereitzustellen, deren Ausgangsstrom temperaturkompensiert auf einem vorgegebenen Wert gehalten wird.

Diese Aufgabe wird mit den im Patentanspruch 1 angegebenen Merkmalen gelöst.
Hiernach ist also vorgesehen, daß einem Eingang des Steuerglieds ein von dem Bahnwiderstand des Schalttransistors beeinflußtes Signal zugeführt ist, und daß einem anderen Eingang des Steuerglieds zum Bestimmen des Tastverhältnisses der intermittierenden Ansteuerung ein Steuersignal zugeführt ist, das mit einem dem Temperaturverlauf des Bahnwiderstandes entgegenwirkenden Temperaturverlauf beaufschlagt ist.

Durch die Zuführung des von dem Bahnwiderstand des Schalttransistors beeinflußten Signals zu dem einen Eingang und dem Steuersignal, das mit einem dem Temperaturverlauf des Bahnwiderstandes entgegenwirkenden Temperaturverlauf beaufschlagt ist, zu dem anderen Eingang des Steuerglieds wird das Ausgangssignal des Steuerglieds temperaturunabhängig und der von der Ansteuereinheit bestimmte Ausgangsstrom zum temperaturunabhängigen Betrieb einer Last auf einem von der Temperatur unbeeinflußten, stabilen Wert gehalten. Eine derartige Schaltung ist z.B. gut geeignet für die Ansteuerung einer Entladungslampe, die lediglich in der Anfangsphase eine erhöhte Anlaufleistung benötigt und danach in den erheblich weniger Leistung erfordernden Brennbetrieb übergeht.

Ist vorgesehen, daß als Steuerglied eine Vergleicherstufe vorgesehen ist, und daß das Steuersignal an dem anderen Eingang durch einen in Abhängigkeit der Temperatur variierten Widerstandswert eines Widerstandsnetzwerks beaufschlagt ist, so wird die Temperaturkompensation mit einfachen Mitteln erzielt.

Dabei bestehen einfache Maßnahmen darin, daß der Bahnwiderstand parallel zu einem ersten Eingangswiderstand an den einen Eingang der Vergleicherstufe angeschlossen ist und daß an dem anderen Eingang ein Spannungsteiler aus einem weiteren Eingangswiderstand und aus einer Widerstandsgruppe mit einem temperaturabhängigen Widerstand angeschlossen ist, wobei der temperaturabhängige Widerstand leicht entsprechend einer geeigneten Kompensationskurve für den Bahnwiderstand gewählt werden kann. Insbesondere kann dabei vorgesehen sein, daß der Bahnwiderstand positiven und der temperaturabhängige Widerstand negativen Temperaturkoeffizienten besitzt und daß der eine Eingang der invertierende und der andere Eingang der nichtinvertierende Eingang der Vergleicherstufe sind. Der positive Temperaturkoeffizient des Bahnwiderstandes wird kompensiert durch den negativen Temperaturkoeffizienten des temperaturabhängigen NTC-Widerstandes.

Ein alternativer Aufbau ist dadurch gekennzeichnet, daß der Bahnwiderstand parallel zu einem ersten Eingangswiderstand an den einen Eingang der Vergleicherstufe angeschlossen ist, daß an dem anderen Eingang ein Spannungsteiler aus einem weiteren Eingangswiderstand und aus einer weiteren Widerstandsgruppe angeschlossen ist und daß der Widerstandswert der weiteren Widerstandsgruppe durch unterschiedliche Kombination in Abhängigkeit der Temperatur zugeschalteter und abgetrennter Widerstände variierbar ist. Auch dieser Aufbau ist mit relativ wenig Aufwand verbunden, wobei die Änderung des Bahnwiderstandes mit der Temperatur durch eine gegenläufige Änderung des Widerstandswertes der weiteren Widerstandsgruppe über der Temperatur kompensiert wird. Um dabei die Steuerung der weiteren Widerstandsgruppe entsprechend der den Bahnwiderstand beeinflussenden Umgebungstemperatur genau vorzunehmen, ist vorteilhaft vorgesehen, daß ein Temperaturfühler vorgesehen ist, der eine den Bahnwiderstand beeinflussende Umgebungstemperatur möglichst genau erfaßt, und daß die Kombination der Widerstände in Abhängigkeit des erfaßten Temperatursignals gesteuert wird. Der Temperaturfühler steht dabei in möglichst enger thermischer Beziehung zu dem Bahnwiderstand.

Das Steuersignal an dem anderen Eingang des Steuerglieds wird zur Vorgabe des Ausgangsstroms beispielsweise dadurch in dem von der Last benötigten zeitlichen Verlauf genau bereitstellbar, daß das Steuersignal an dem anderen Eingang des Steuergliedes von einer zentralen Steuerungseinheit bereitgestellt wird.

Eine weitere alternative Ausführungsform besteht darin; daß das Steuersignal in der zentralen Steuerungseinheit mittels eines Programms in Abhängigkeit von den Eigenschaften des Schalttransistors und der Temperatur im Bereich des Bahnwiderstands erzeug wird. Das dem anderen Eingang des Steuerglieds zugeführte Steuersignal wird dabei auf einfache Weise und den jeweiligen Erfordernissen genau angepaßt durch Software erzeugt, wobei die Eigenschaften des jeweiligen Schalttransistors und gewünschtenfalls weitere Eigenschaften der Schaltung mit einfachen Maßnahmen ohne schaltungstechnische Änderungen am Eingang des Steuerglieds berücksichtigt werden können. Auch kann ein jeweiliges gewünschtes Regelverhalten mit der zentralen Steuerungseinheit vorgegeben werden, so daß Eigenarten beim Betreiben der Last in Verbindung mit dem Temperaturverlauf des Bahnwiderstandes ebenfalls berücksichtigt werden können.

Die Erfindung wird nachfolgend anhand von Ausführungsbeispielen unter Bezugnahme auf die Zeichnungen näher dargestellt. Es zeigen:
- Fig. 1: ein Blockschaltbild einer Schaltungsanordnung mit einem Schalttransistor und Temperaturkompensation,
- Fig. 2: ein erstes Ausführungsbeispiel für die Temperaturkompensation
- Fig. 3: ein weiteres Ausführungsbeispiel für die Temperaturkompensation und
- Fig. 4: ein weiteres Ausführungsbeispiel für die Temperaturkompensation.

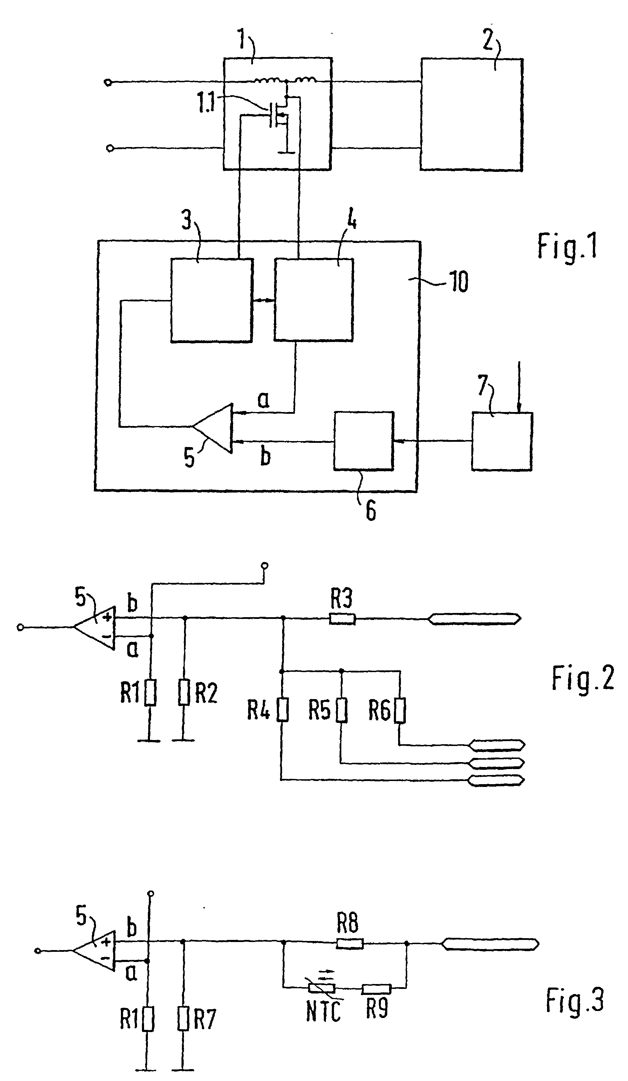

Die in Fig. 1 als Blockschaltbild dargestellte Schaltungsanordnung weist in ihrem oberen, ersten Schaltungsabschnitt einen beispielsweise an eine Autobatterie angeschlossenen DC/DC-Wandler 1 mit einem Schalttransistor 1.1 in Form eines Feldeffekt-Schalttransistors auf. An den DC/DC-Wandler ist eine zu betreibende Last 2, wie z.B. eine Entladungslampe angeschaltet.

Der DC/DC-Wandler 1 mit dem Schalttransistor 1.1 wird mit einer darunter dargestellten Ansteuereinheit 10 mit einer Ansteuerschaltung 3, einem Steuerglied in Form einer Vergleicherstufe 5, einer Bewertungsschaltung 4 und einer Pegeleinstellstufe 6 intermittierend angesteuert, um den Ausgangsstrom für die Last 2 nach Bedarf vorzugeben. Der erforderliche Ausgangsstrom wird mit einem Steuersignal einer zentralen Steuerungseinheit in Form eines Mikroprozessors bzw. Mikrocontrollers 7 gesteuert.

Je nach dem Ausgangsstrom, der der Last 2 bereitgestellt werden muß und z.B. bei eine Lampe in der anfänglichen Anlaufphase während der ersten 20 sec. eine erheblich höhere Leistung aufnimmt als in der daran anschließenden stabilen Brennphase, wird mit dem von dem Mikrocontroller 7 bestimmten Steuersignal eine Schaltschwelle an der Vergleicherstufe 5 vorgegeben. Dazu wird dem einen Eingang a der Vergleicherstufe 5 ein Signal von dem Schalttransistor 1.1 über die Bewertungsschaltung 4 zugeführt, während dem anderen Eingang b der Vergleicherstufe 5 das Steuersignal über die Pegeleinstellstufe 6 zugeführt wird. Das Tastverhältnis des von der Vergleicherstufe 5 ausgegebenen Signals hängt zum einen von dem z.B. dreieckförmigen oder trapezförmigen Signal an dem einen Eingang a und zum anderen von dem Pegel des Steuersignals an dem anderen Eingang b ab, und das von der Vergleicherstufe 5 ausgegebene Signal wird über die Ansteuerschaltung 3 dem Gate-Anschluß des Feldeffekt-Schalttransistors 1.1 zugeführt.

Das über die Bewertungsschaltung 4 dem einen Eingang a der Vergleicherstufe 5 zugeführte Signal hängt von dem Wert des Bahnwiderstandes des Feldeffekt-Schalttransistors 1.1 ab, der seinerseits temperaturabhängig ist und z.B. bei -50 °C gegenüber Zimmertemperatur um den Faktor 0,6 niedriger ist, während er bei 130 °C gegenüber Zimmertemperatur um den Faktor 2 größer ist. Je nach Typ beträgt der Bahnwiderstand bei Zimmertemperatur z.B. einige 10mΩ. Aufgrund der Temperaturabhängigkeit kann der von dem Mikrocontroller 7 über die Ansteuereinheit 10 bestimmte Ausgangsstrom stark verfälscht sein, so daß z.B. der von der Autobatterie entnommene Strom an Kabelbaumwiderständen und Übergangswiderständen von Kontakten einen erheblichen Spannungsabfall bewirkt, so daß die benötigte minimale Versorgungsspannung für die Schaltungsanordnung unterschritten werden kann. Auch andere negative Einflüsse auf die ordnungsgemäße Funktion der Schaltungsanordnung können sich durch die Änderung des Bahnwiderstandes ergeben.

Um trotz Temperaturänderungen, die beispielsweise bei einer Lampenansteuerung insbesondere in der Anfangsphase durch eine hohe Verlustleistung auftreten können, einen von der Temperatur unabhängigen, stabilen Ausgangsstrom zu gewährleisten, sind vorliegend Maßnahmen ergriffen, mit denen der Beeinflussung des Ausgangsstroms durch Temperaturänderung entgegengewirkt wird.

In Fig. 2 ist ein erstes Ausführungsbeispiel gezeigt. Das von dem Feldeffekt-Schalttransistor 1.1 abgeleitete, von dem Bahnwiderstand beeinflußte Signal wird dem einen Eingang a in Form des invertierenden Eingangs der Vergleicherstufe 5 zugeführt und ist über einen Eingangswiderstand R1 an Masse gelegt. Wird die Bewertungsschaltung 4 als Knoten betrachtet, so liegt, wie aus den Fig. 1 und 2 ersichtlich ist, der Eingangswiderstand R1 parallel zu dem Bahnwiderstand des Feldeffekt-Schalttransistors 1.1 gegen Masse. Bei einer Erhöhung des Bahnwiderstandes infolge Temperaturerhöhung erhöht sich somit auch der an der Parallelschaltung des Bahnwiderstandes und des Eingangswiderstandes R1 abfallende Spannungspegel, d.h. die Spannung an dem einen Eingang a. Dieser durch die Temperaturänderung hervorgerufenen Spannungsänderung wird dadurch entgegengewirkt, daß entsprechend der Änderung des Bahnwiderstandes mit der Temperatur an dem anderen, nichtinvertierenden Eingang b der Vergleicherstufe 5 die an einem Widerstandsnetzwerk aus Widerständen R2 bis R6 abfallende Spannung ebenfalls angehoben wird, indem eine geeignete Kombination von Widerständen R4 bis R6 in Abhängigkeit der Temperaturänderung geschaltet wird. Dazu ist ein nicht gezeigter Temperaturfühler in möglichst enger thermischer Verbindung zu dem Bahnwiderstand des Feldeffekt-Schalttransistors 1.1 vorgesehen, der ein Temperatursignal an den Mikrocontroller 7 abgibt. Über jeweils zugeordnete Ausgänge des Mikrocontrollers 7 wird die Kombination der Widerstände R4 bis R6 gewählt, so daß sich im Zusammenwirken mit dem Widerstand R3 und dem anderen Eingangswiderstand R2 ein geeigneter Spannungsteilerwert ergibt. Über den Widerstand R3 wird vom Mikrocontroller 7 aus der Sollwert für den Ausgangsstrom vorgegeben.

Ein weiteres Ausführungsbeispiel für eine Temperaturkompensation des Bahnwiderstandes des Feldeffekt-Schalttransistors 1.1 ist in Fig. 3 wiedergegeben. Entsprechend dem Ausführungsbeispiel nach Fig. 2 wird das von dem Feldeffekt-Schalttransistor 1.1 abgeleitete Signal über die Bewertungsschaltung 4 dem invertierenden einen Eingang a der Vergleicherstufe 5 zugeführt, so daß der Bahnwiderstand auch hierbei parallel gegebenenfalls mit anderen Schaltungskomponenten zu dem einen Eingangswiderstand R1 liegt. Der an dem einen Eingang a erzeugte Spannungspegel wird demgemäß in der vorstehend beschriebenen Weise durch eine temperaturabhängige Widerstandsänderung des Bahnwiderstandes beeinflußt. Zur Kompensation ist an dem anderen, nichtinvertierenden Eingang b der Vergleicherstufe 5 ein Spannungsteiler aus Widerständen R7, R8, R9 und NTC angeschlossen.

Das Steuersignal des Mikrocontrollers 7 wird über diesen Spannungsteiler dem anderen Eingang b der Vergleicherstufe 5 zugeführt. Der temperaturabhängige Widerstand NTC ist in möglichst enger thermischer Nähe zu dem Bahnwiderstand des Feldeffekt-Schalttransistors 1.1 angeordnet und wird demnach gegenläufig zu dem Bahnwiderstand bei Temperaturerhöhung herabgesetzt bzw. bei Temperaturerniedrigung vergrößert. Dadurch erhöht sich bei höherer Temperatur auch der Spannungspegel an dem anderen Eingang b der Vergleicherstufe 5, so daß auch hierbei ein von der Temperatur unabhängiges Tastverhältnis an dem Ausgang der Vergleicherstufe 5 und damit ein von einer Temperatur unabhängiger, konstanter Ausgangsstrom erzielt wird. Der temperaturabhängige Widerstand NTC ist entsprechend dem Temperaturverlauf des Bahnwiderstandes zur Kompensation geeignet gewählt.

Entsprechend den beschriebenen Ausführungsbeispielen sind auch ähnliche Schaltungen am Eingang der Vergleicherstufe 5 denkbar, mit denen der Änderung des Bahnwiderstandes in Abhängigkeit von der Temperatur entgegengewirkt werden kann, indem der Spannungspegel an dem anderen Eingang b der Vergleicherstufe 5 zur Kompensation der Temperaturdrift des Bahnwiderstandes geeignet in Abhängigkeit der Temperatur beeinflußt wird.

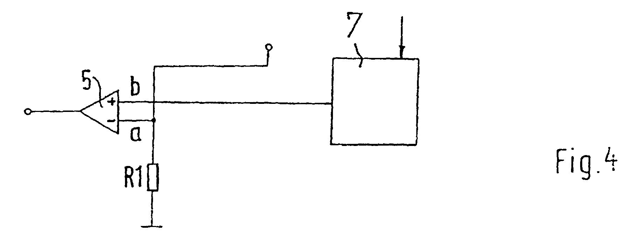

Bei einer in Fig. 4 gezeigten weiteren Ausführungsform der Schaltungsanordnung ist an dem anderen Eingang b des Steuerglieds in Form der Vergleicherstufe 5 unmittelbar oder über ein geeignetes Filterglied, das zum Beispiel einen Speicherkondensator und einen Widerstand aufweist, eine zentrale Steuerungseinheit 7 angeschlossen. Mit der zentralen Steuerungseinheit kann das kompensierende Steuersignal auf einfache Weise mittels eines Programms in Abhängigkeit von dem Temperaturverlauf des Bahnwiderstandes des Schalttransistors 1.1 für die jeweils vorherrschende Temperatur erzeugt werden. Die Temperatur wird mittels eines geeigneten Temperaturfühlers erfaßt, wie in Fig. 4 mit einem Pfeil angedeutet. Mit der zentralen Steuerungseinheit 7 ist es auch möglich, ein günstiges Regelverhalten für die Ansteuerung der Last 2 jeweils unter Berücksichtigung der vorliegenden Temperatur einzustellen. Beispielsweise kann zum Ansteuern einer Endladungslampe das Regelverhalten in der Anlaufphase und während des Brennbetriebs mit dem Programm geeignet gewählt werden.

## Patentansprüche

1. Schaltungsanordnung mit einem in einem ersten Schaltungsabschnitt angeordneten Schalttransistor (1.1), der über eine ein Steuerglied (5) aufweisende Ansteuereinheit (10) zur Abgabe eines vorgegebenen oder vorgebbaren Ausgangsstroms intermittierend angesteuert wird,
wobei
einem Eingang (a) des Steuerglieds (5) ein von dem Bahnwiderstand des Schalttransistors (1.1) beeinflußtes Signal zugeführt ist, **dadurch gekennzeichnet,**
**daß** einem anderen Eingang (b) des Steuerglieds (5) zum Bestimmen des Tastverhältnisses der intermittierenden Ansteuerung ein Steuersignal zugeführt ist, das mit einem dem Temperaturverlauf des Bahnwiderstandes entgegenwirkenden Temperaturverlauf beaufschlagt ist.

2. Schaltungsanordnung nach Anspruch 1,
**dadurch gekennzeichnet,**
**daß** als Steuerglied eine Vergleicherstufe (5) vorgesehen ist und
**daß** das Steuersignal an dem anderen Eingang (b) durch einen in Abhängigkeit der Temperatur variierten Widerstandswert eines Widerstandsnetzwerks (R2 bis R6; R7 bis R9, NTC) beaufschlagt ist.

3. Schaltungsanordnung nach Anspruch 2,
**dadurch gekennzeichnet,**
**daß** der Bahnwiderstand parallel zu einem ersten Eingangswiderstand (R1) an den einen Eingang (a) der Vergleicherstufe (5) angeschlossen ist und
**daß** an dem anderen Eingang (b) ein Spannungsteiler aus einem weiteren Eingangswiderstand (R7) und aus einer Widerstandsgruppe (R8, R9, NTCI mit einem temperaturabhängigen Widerstand (NTC) angeschlossen ist.

4. Schaltungsanordnung nach Anspruch 3,
**dadurch gekennzeichnet,**
**daß** der Bahnwiderstand positiven und der temperaturabhängige Widerstand (NTC) negativen Temperaturkoeffizienten besitzt und
**daß** der eine Eingang (a) der invertierende und der andere Eingang (b) der nichtinvertierende Eingang der Vergleicherstufe (5) sind.

5. Schaltungsanordnung nach Anspruch 2,
**dadurch gekennzeichnet,**
**daß** der Bahnwiderstand parallel zu einem ersten Eingangswiderstand (R1) an den einen Eingang (a) der Vergleicherstufe (5) angeschlossen ist,
**daß** an dem anderen Eingang (b) ein Spannungsteiler aus einem weiteren Eingangswiderstand (R2) und aus einer weiteren Widerstandsgruppe (R3 bis R6) angeschlossen ist und
**daß** der Widerstandswert der weiteren Widerstandsgruppe durch unterschiedliche Kombination in Abhängigkeit der Temperatur zugeschalteter und abgetrennter Widerstände (R4, R5, R6) variierbar ist.

6. Schaltungsanordnung nach Anspruch 5,
**dadurch gekennzeichnet,**
**daß** ein Temperaturfühler vorgesehen ist, der eine den Bahnwiderstand beeinflussende Umgebungstemperatur möglichst genau erfaßt, und
**daß** die Kombination der Widerstände (R4, R5, R6) in Abhängigkeit des erfaßten Temperatursignals gesteuert wird.

7. Schaltungsanordnung nach einem der Ansprüche 1 bis 6,
**dadurch gekennzeichnet,**
**daß** das Steuersignal an dem anderen Eingang (b) des Steuergliedes (5) von einer zentralen Steuerungseinheit (7) bereitgestellt wird.

8. Schaltungsanordnung nach Anspruch 7,
**dadurch gekennzeichnet,**
**daß** das Steuersignal in der zentralen Steuerungseinheit (7) mittels eines Programms in Abhängigkeit von den Eigenschaften des Schalttransistors (1.1) und der Temperatur im Bereich des Bahnwiderstands erzeug wird.

## Claims

1. Circuit arrangement, with a switching transistor (1.1) which is arranged in a first circuit section and is driven intermittently via a drive unit (10) having a control element (5), in order to deliver a predetermined or predeterminable output current,
wherein
a signal influenced by the bulk resistance of the switching transistor (1.1) is fed to one input (a) of the control element (5), **characterised in that**
a control signal, to which a temperature profile counteracting the temperature profile of the bulk resistance is applied, is fed to the other input (b) of the control element (5) in order to determine the duty ratio of the intermittent driving.

2. Circuit arrangement according to Claim 1,
**characterised in that**
a comparator stage (5) is provided as the control element, and **in that**
a resistance of a resistor network (R2 to R6; R7 to R9, NTC), which is varied as a function of the temperature, is applied to the control signal at the other input (b).

3. Circuit arrangement according to Claim 2,
**characterised in that**
the bulk resistance is connected in parallel with a first input resistor (R1) to the one input (a) of the comparator stage (5), and **in that**
a voltage divider, comprising a further input resistor (R7) and a resistor group (R8, R9, NTC) with a temperature-dependent resistor (NTC), is connected to the other input (b).

4. Circuit arrangement according to Claim 3,
**characterised in that**
the bulk resistance has a positive temperature coefficient and the temperature-dependent resistor (NTC) has a negative temperature coefficient, and **in that** the one input (a) is the inverting input of the comparator stage (5) and the other input (b) is the non-inverting input of the comparator stage (5).

5. Circuit arrangement according to Claim 2,
**characterised in that**
the bulk resistance is connected in parallel with a first input resistor (R1) to the one input (a) of the comparator stage (5), **in that**
a voltage divider, comprising a further input resistor (R2) and a further resistor group (R3 to R6), is connected to the other input (b), and **in that**
the resistance of the further resistor group can be varied by a different combination, as a function of the temperature, of connected and disconnected resistors (R4, R5, R6).

6. Circuit arrangement according to Claim 5,
**characterised in that**
a temperature sensor is provided, which records as accurately as possible an ambient temperature influencing the bulk resistance, and
the combination of the resistors (R4, R5, R6) is controlled as a function of the recorded temperature signal.

7. Circuit arrangement according to one of Claims 1 to 6,
**characterised in that**
the control signal at the other input (b) of the control element (5) is provided by a central control unit (7).

8. Circuit arrangement according to Claim 7,
**characterised in that**
the control signal is generated in the central control unit (7) by means of a program as a function of the properties of the switching transistor (1.1) and the temperature in the vicinity of the bulk resistance.

## Revendications

1. Circuit comprenant un transistor (1.1) dans une première partie de circuit, ce transistor étant commandé de façon intermittente par une unité de commande (10) ayant un élément de commande (5) pour émettre un courant de sortie prédéterminé,
une entrée (a) de 1'élément de commande (5) recevant le signal influencé par la résistance de volume du transistor de commutation (1.1),
**caractérisé en ce que**
l'autre entrée (b) de l'élément de commande (5), pour déterminer le rapport de travail de la commande intermittente, reçoit un signal de commande avec une courbe de température s'opposant à la courbe de température de la résistance de volume.

2. Circuit selon la revendication 1,
**caractérisé en ce que**
l'élément de commande est un comparateur (5) et le signal de commande appliqué à l'autre entrée (b) est formé par une valeur de résistance variant en fonction de la température d'un réseau résistant (R2-R6; R7-R9, NTC).

3. Circuit selon la revendication 2,
**caractérisé en ce que**
la résistance de volume est branchée en parallèle dune première résistance d'entrée (R1) sur une entrée (a) du comparateur (5) et l'autre entrée (b) est reliée à un diviseur de tension formé d'une autre résistance d'entrée (R7) et d'un groupe de résistances (R8, R9, NTC) ayant une résistance (NTC) dépendant de la température.

4. Circuit selon la revendication 3,
**caractérisé en ce que**
la résistance de volume possède un coefficient de température positif et la résistance dépendant de la température (NTC) possède un coefficient de température négatif, et
une entrée (a) est l'entrée inversée et l'autre entrée (b) est l'entrée non inversée du comparateur (5).

5. Circuit selon la revendication 2,
**caractérisé en ce que**
la résistance de volume est reliée en parallèle sur une première résistance d'entrée (R1) à l'ent (a) du comparateur (5),
l'autre entrée (b) reçoit un diviseur de tension formé d'une autre résistance d'entrée (R2) et d'un autre groupe de résistances (R3-R6), et
la valeur de la résistance du premier groupe de résistances peut être modifiée par différentes combinaisons en fonction de la température, en branchant ou en coupant des résistances (R4, R5, R6).

6. Circuit selon la revendication 5,
**caractérisé par**
un capteur de température détectant aussi précisément que possible la température ambiante influençant la résistance de volume, et
la combinaison des résistances (R4, R5, R6) est commandée suivant le signal de température détecté.

7. Circuit selon Tune quelconque des revendications 1 à 6,
**caractérisé en ce que**
le signal de commande est fourni à l'autre entrée (b) de l'élément de commande (5) par une unité de commande centrale (7).

8. Circuit selon la revendication 7,
**caractérisé en ce que**
le signal de commande est formé par l'unité de commande centrale (7) par un programme en fonction des propriétés du transistor de commutation (1.1) et de la température au niveau de la résistance de volume.
